# EUROPEAN PATENT SPECIFICATION

(11) **EP 3 619 418 B1**
(45) Date of publication and mention of the grant of the patent: **19.07.2023**
(21) Application number: 17721685.0
(22) Date of filing: 05.05.2017
(51) Int. Cl.: F02M 21/02

(54) **A LIQUEFIED GAS FUEL FEEDING SYSTEM AND A MARINE VESSEL**
BRENNGASVERSORGUNGSEINRICHTUNG ZUR BEREITSTELLUNG EINES BRENNGASES UND SCHIFF
SYSTÈME D'ALIMENTATION EN COMBUSTIBLE À GAZ LIQUÉFIÉ UND NAVIRE MARIN

(43) Date of publication of application: 11.03.2020
(73) Proprietor: Wärtsilä Finland Oy, 65100 Vaasa (FI)
(72) Inventor: WIDJESKOG, Klaus, 65380 Vaasa (FI); HÖGNABBA, Tomas, 65380 Vaasa (FI); HALONEN, Ville, 65380 Vaasa (FI)
(74) Representative: Genip Oy
(86) International application number: PCT/EP2017/060796
(87) International publication number: WO 2018/202313

(56) References cited:
- WO-A1-2014/091061
- CA-A1- 2 653 643
- JP-A- 2005 308 149
- US-A- 5 771 946
- US-A1- 2013 104 997

## Description

### Technical field

The present invention relates to a liquefied gas fuel feeding system for an internal combustion piston engine comprising: a tank configured to store fuel in cryogenic conditions, which when in use comprises a liquid gas space having a surface and an ullage space above the surface, a fuel supply line arranged to extend from the tank to the internal combustion piston engine, the fuel supply line comprising successively a first line section and a second line section, wherein the first line section is configured to receive liquefied gas from the tank, and comprises a liquid fuel pump configured to raise the pressure of liquefied gas to a predetermined first pressure and a gas evaporator configured to evaporate the liquefied gas at the first pressure; and wherein the second line section is configured to receive gaseous gas from the gas evaporator, the second line section comprising a gas valve unit arranged to the second line section and configured to open or close the flow connection between the gas evaporation system and the internal combustion piston engine.

### Background art

Natural gas as a fuel for internal combustion engines in marine vessels has become more common because of the environmental reasons since the combustion results are less harmful than for example those resulted in combustion of heavy or light fuel oil. At the same time the equipment for handling and regulating gas fuel is subjected to stringent safety regulations. Gaseous fuels are generally harmful to the environment and therefore any leakage to the atmosphere is undesired.

EP 2032428 B1 discloses a fuel system for a gas driven piston engine in a marine vessel, which gas is stored in at least one fuel storage tank in the vessel as liquefied gas. The fuel feeding system comprises a separate fuel feed tank in which the gas is in liquid phase and at elevated pressure. The gas is also in liquid phase in the fuel storage tank, in which, however, prevails only the hydrostatic pressure caused by the liquid gas. In this kind of fuel system situations may occur in which excess gas needs to be purged from the tank, and often that means admission of gas into the atmosphere.

US 5127230 discloses an LNG (liquefied natural gas) delivery system for a gas powered vehicle. The system includes a pair of LNG high pressure fuel tanks from which fuel is delivered to an engine. The system comprises vent valves set to operate if the pressure in the tanks of the system exceeds an abnormally high pressure. During normal operation, instead of admitting gas into atmosphere, the system is configured to lead gas from a non-selected tank to be used in the engine if the pressure rises over a predetermined pressure. This is possible since the system includes a pair of similar high pressure tanks which in practise means that the system is somewhat complicated.

Document CA2653643 A1 discloses a pressure control system comprising separate conduits for supplying liquefied gas and vapour from a cryogen space defined by a cryogenic storage tank. A first conduit can deliver liquefied gas to a use device through a heater and then a first flow controller. A second conduit can deliver vapour to the use device with flow therethrough controlled by a second flow controller. The first flow controller is not exposed to liquefied gas at cryogenic temperatures because it is located downstream from the heater. For automatic operation a pressure sensor measures pressure inside the cryogen space and the first and second flow controllers are independently operable to maintain the pressure inside the cryogen space within a predetermined range.

Document US2013/104997 A1 discloses a liquefied gas fuel feeding system for an internal combustion piston engine comprising: a tank configured to store fuel in cryogenic conditions, which when in use comprises a liquid gas space (lower part) having a surface and an ullage space (upper part) above the surface; a fuel supply line (line before pump) arranged to extend from the tank to the internal combustion piston engine, the fuel supply line (line before pump) comprising successively a first line section (line before pump), and a second line section, wherein the first line section is configured to receive liquefied gas from the tank, and comprises a liquid fuel pump configured to raise the pressure of liquefied gas to a predetermined first pressure and a gas evaporator in the pump configured to evaporate the liquefied gas into gaseous form at the first pressure: and wherein the second line section is configured to receive gaseous gas from the gas evaporator, the second line section comprising a gas valve unit configured to open or close the flow connection between the gas evaporator and the internal combustion piston engine; wherein the liquefied gas fuel feeding system is provided with a return line extending from the second line section to the tank, the return line opening into the ullage space of the tank; and being provided with a first pressure relief valve configured to open when pressure in the second line section exceeds at a first set pressure.

An object of the invention is to provide a liquefied gas fuel feeding system in which the admission of the gas to the surroundings is minimized.

### Disclosure of the Invention

Objects of the invention can be met substantially as is disclosed in the independent claims and in the other claims describing more details of different embodiments of the invention.

A liquefied gas fuel feeding system for an internal combustion piston engine comprising: a tank configured to store fuel in cryogenic conditions, which when in use comprises a liquid gas space having a surface and an ullage space above the surface; a fuel supply line arranged to extend from the tank to the internal combustion piston engine, the fuel supply line comprising successively a first line section and a second line section, wherein the first line section is configured to receive liquefied gas from the tank, and comprises a liquid fuel pump configured to raise the pressure of liquefied gas to a predetermined first pressure and a gas evaporator configured to evaporate the liquefied gas at the first pressure; and wherein the second line section is configured to receive gaseous gas from the gas evaporator, the second line section comprising a gas valve unit arranged to the second line section and configured to open or close the flow connection between the gas evaporation system and the internal combustion piston engine; whereby the liquefied gas fuel feeding system is provided with a return line extending from the second line section to the tank, the return line opening into the ullage space of the tank and being provided with a first pressure relief valve configured to open when pressure in the second line section exceeds a first set pressure, wherein the liquefied gas fuel feeding system comprises a conduit configured to provide a flow connection between the second line section and the ullage space of the tank, and that the conduit is provided with a valve member, the conduit extends from the second line section, to the return line, to a location between the first pressure relief valve and the tank, which conduit is at least partly parallel to the first pressure relief valve and the valve member is parallel to the first pressure relief valve.

According to an embodiment of the invention the tank is configured to contain the fuel only typically at less than 1MPa.

According to an embodiment of the invention the tank is configured to store the fuel at about 100 - 400 kPa.

According to the invention the liquefied gas fuel feeding system comprises a conduit configured to provide a flow connection between the second line section and the ullage space of the tank, the conduit being provided with a valve member.

According to the invention the conduit extends from the second line section to the return line, to a location between the first pressure relief valve and the tank, which conduit is at least partly parallel to the first pressure relief valve and the valve member is parallel to the first pressure relief valve.

According to an embodiment of the invention the return line is provided with a heat exchanger coupled at its first side to the return line and at its second side to the first line section of the fuel supply line.

According to an embodiment of the invention the tank is provided with a second pressure relief valve and the first pressure relief valve is configured to open at a higher pressure than the second pressure relief valve.

According to the invention a marine vessel comprises an internal combustion piston engine provided with a liquefied gas fuel feeding system according to any one of the claims 1-5.

The exemplary embodiments of the invention presented in this patent application are not to be interpreted to pose limitations to the applicability of the appended claims. The verb "to comprise" is used in this patent application as an open limitation that does not exclude the existence of also unrecited features. The liquefied gas fuel feeding system according to the invention is applicable both for vessels carrying liquefied gas as cargo and for vessels using liquefied gas as fuel for gas consumers in the vessel. On LNG cargo vessels there may be additional compressors used for further pressurizing the fuel to be fed into engines.

The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a liquefied gas fuel feeding system according to an embodiment of the invention, and
Figure 2 illustrates a liquefied gas fuel feeding system according to another embodiment of the invention.

### Detailed Description of Drawings

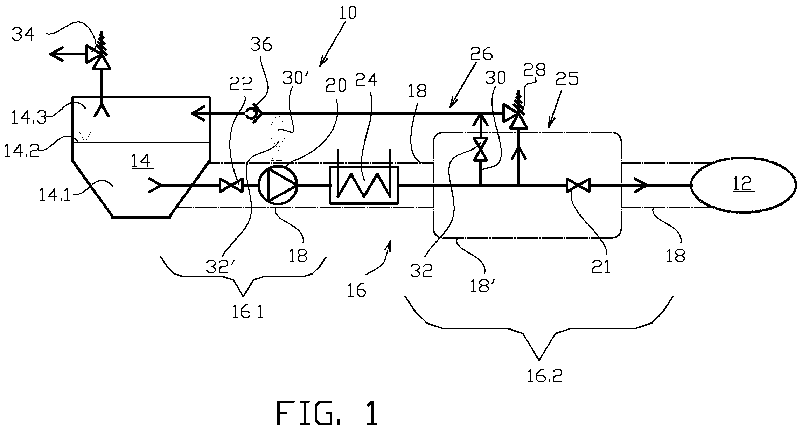

Figure 1 depicts schematically a liquefied gas fuel feeding system 10 which is suitable for feeding gaseous fuel to an internal combustion piston engine 12 for example in a land based or a marine vessel power plant. The liquefied gas fuel feeding system 10 for an internal combustion piston engine 12 comprises a tank 14. The tank 14 is configured to store fuel in cryogenic conditions, which means that it is provided with suitable heat insulation. Also, the tank is configured to store the fuel only typically at a moderate pressure, say about 100 - 400 kPa, or at least below 1 MPa. Thus, when in use i.e. being filled with gas the tank, more precisely the tank inner space, comprises a liquid gas space 14.1 having a surface 14.2 and an ullage space 14.3 above the surface.

The gas fuel feeding system 10 comprises further a fuel supply line 16. The fuel supply line 16 is arranged to extend from the tank 14 to the internal combustion piston engine 12 such that the gas may be delivered to the engine 12 for use as its fuel. The fuel supply line 16 is provided with an enclosure 18 which forms a double wall surrounding for the inner pipe and the components in which the gas is conveyed or processed between the tank 14 and the engine 12. Where the fuel supply line 16 is a pipe the enclosure is advantageously an outer pipe around the pipe. The enclosure 18 may also comprise a cabinet 18' or alike in which certain auxiliary components such as a main gas valve 21, pressure regulators or pressure transmitter can be positioned.

The fuel supply line 16 comprises successively a first line section 16.1 and a second line section 16.2, in which the first section is configured to handle liquefied gas and the second section is configure to handle gaseous gas. The first line section 16.1 is arranged to open into the liquid gas space 14.1 of the tank 14 from which it receives liquefied gas. The fuel supply line, more specifically the first line section comprises also a liquid fuel pump 20, which is configured to raise the pressure of liquefied gas to a level of predetermined first pressure. The first pressure level is such that it exceeds the required fuel feed pressure of the engine 12 added with the pressure losses in the fuel supply line 16. The first line section 16.1 is also provided with a shut-off valve 22 arranged between the tank 14 and the pump 20 i.e. at the suction side of the pump 20. Further the fuel supply line 16 comprises a gas evaporation system 24 configured to evaporate the liquefied gas into gaseous form and optionally to heat the evaporated gas to a desired temperature. The gas evaporation system 24 comprises a heat transfer unit or units which are connectable to a suitable heat source such as a cooling system of the engine 12. The evaporation system may also be referred to as an evaporator. The evaporation of the gas in the evaporator 24 takes place at the first pressure. The second line section 16.2 starts from the evaporation system 24 and extends to the engine 12. Thus, the second line section 16.2 is configured to receive gaseous gas from the gas evaporator 24. The second line section 16.2 comprises a so called gas valve unit 25, which is formed of the cabinet 18' and its components. The gas valve unit 25 is arranged to the second line section 16.2 and comprises the main gas valve 21. The main gas valve 21 is configured to open or close the flow connection between the gas evaporator 24 and the internal combustion piston engine 12.

Further, the liquefied gas fuel feeding system 16 is provided with a return line 26 which is extending from the second line section 16.2 to the tank 14 such that the return line 26 is opening into the ullage space 14.3 of the tank 14. The return line is provided with a first pressure relief valve 28. The first pressure relief valve is set to open at a first set pressure which is more than the first pressure level. This way, in case the pressure of the gas in the second line section 16.2 of the fuel supply line 16 exceeds the first set pressure, the relief valve 28 opens and the pressure in the fuel supply line 16 is decreased. The excess gas purged from the fuel supply line 16 is directed via the first return line 26 back to the tank 12. The excess gas is introduced into the ullage space 14.3 of the tank, which has a substantially large volume such that the excess gas introduced into the tank raises the pressure in the tank 14 only moderately.

In the embodiment of the figure 1 the return line 26 is provided with a check valve 36 as an additional and optional feature. The check valve is configured to allow gas flow in the direction towards the tank 14. This way the pressure changes in the tank 14 are not received by the return line 26. Thus, if a single tank 14 is provided with more than one parallel liquefied gas fuel feeding system (not shown) the check valve 36 isolates the systems from each other.

It is also conceivable to connect other gas sources, from which gas needs to be withdrawn, to the return line 26. In the figure 1 the pump 20 is connected to the return line optionally for discharging vent gas from the pump to the tank 14. As is depicted by a dotted line in the figure 1, the liquefied gas fuel feeding system 10 comprises a conduit 30' which is configured to provide a third flow connection between the pump 20 and the ullage space 14.3 of the tank 14. The conduit 30' is provided with a valve member 32'. The valve member 32' can be opened and closed manually or it can be connected to a control system which is configured to open the valve when certain predetermined criteria is met.

By means of the present invention any sudden increase of the pressure, regardless of the cause of such increase, of the gaseous gas causes the pressure relief valve 28 to open and the gas flow through the pressure relief valve 28 to return to the tank 14. The pressure in the tank is considerably lower than the gas pressure in the second line section 16.2, which makes it possible to route the gas back to the tank 14. This way, practically no gas is admitted to the atmosphere.

The tank is provided with a second pressure relief valve 34 by means of which it is ensured that the pressure in the tank cannot raise too high. However, when the engine 12 is running the gas consumption is so high that the pressure in the tank 14 will not normally raise too high even if some gas would be introduced back to the tank 14 via the return line 26 or the conduit 30'. The first pressure relief valve 28 is configured to open at a higher pressure than the second pressure relief valve 34, such that no damage can be caused to the tank structure.

According to the invention the liquefied gas fuel feeding system 10 comprises a conduit 30 which is configured to provide a second flow connection between the second line section 16.2 of the liquefied gas fuel feeding system 16 and the ullage space 14.3 of the tank 14. The conduit 30 is provided with a valve member 32. The valve member can be opened and closed manually or it can be connected to a control system which is configured to open the valve when certain predetermined criteria is met. By means of the conduit 30 and the valve member 32 the gas pressure in the fuel supply line 16 can be safely relieved to the tank for example for servicing the gas fuel feeding system. In the embodiment of the figure 1 the conduit 30 extends from the second line section 16.2, to a location between the coupling position of the return line 26 and the tank 14, to the return line 26 downstream the first pressure relief valve 28.

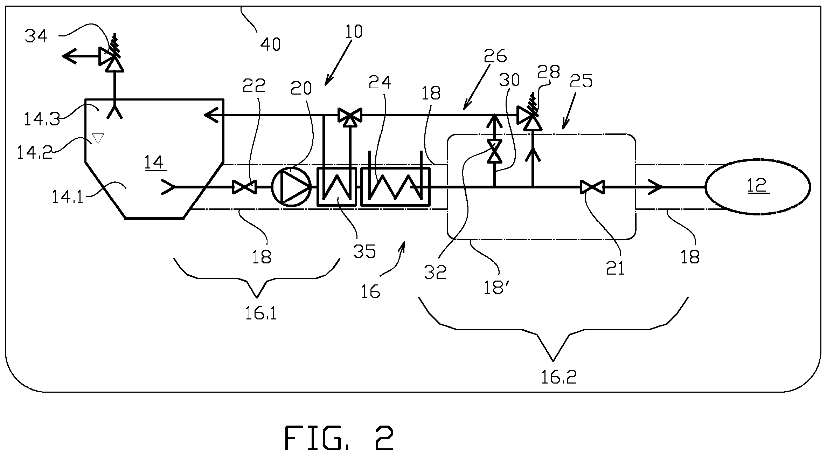

In the figure 2 there is shown another embodiment of the invention otherwise similar to that shown in the figure 1, except that the return line 26 is here provided with a heat exchanger 35 coupled at its first side to the return line 26 and at its second side to the first line section 16.1 of the fuel supply line 16. This way gas returned to the tank 14 is cooled down by the liquefied gas flowing in the first line section. In the figure 2 there is also shown a marine vessel 40 which comprises an internal combustion piston engine 12 provided with a liquefied gas fuel feeding system 10 according to the invention.

## Claims

1. A liquefied gas fuel feeding system (10) for an internal combustion piston engine (12) comprising:
a tank (14) configured to store fuel in cryogenic conditions, which when in use comprises a liquid gas space (14.1) having a surface (14.2) and an ullage space (14.3) above the surface (14.2);
a fuel supply line (16) arranged to extend from the tank (14) to the internal combustion piston engine (12), the fuel supply line (16) comprising successively a first line section (16.1) and a second line section 16.2), wherein the first line section (16.1) is configured to receive liquefied gas from the tank (14), and comprises a liquid fuel pump (20) configured to raise the pressure of liquefied gas to a predetermined first pressure and a gas evaporator (24) configured to evaporate the liquefied gas into gaseous form at the first pressure; and
wherein the second line section (16.2) is configured to receive gaseous gas from the gas evaporator (24), the second line section (16.2) comprising a gas valve unit (25) configured to open or close the flow connection between the gas evaporator (24) and the internal combustion piston engine (12);
the liquefied gas fuel feeding system (10) is provided with a return line (26) extending from the second line section (16.2) to the tank (14), the return line (26) opening into the ullage space (14.3) of the tank (14) and being provided with a first pressure relief valve (28) configured to open when pressure in the second line section (16.2) exceeds a first set pressure, **characterized in that**,
the liquefied gas fuel feeding system (10) comprises a conduit (30) configured to provide a flow connection between the second line section (16.2) and the ullage space of the tank (14), and that the conduit (30) is provided with a valve member (32), the conduit (30) extends from the second line section (16.2), to the return line (26), to a location between the first pressure relief valve (28) and the tank (14), which conduit (30) is at least partly parallel to the first pressure relief valve (28) and the valve member (32) is parallel to the first pressure relief valve (28).

2. The liquefied gas fuel feeding system (10) according to claim 1, **characterized in that** the return line (26) is provided with a heat exchanger (35) coupled at its first side to the return line (26) and at its second side to the first line section (16.1) of the fuel supply line (16).

3. The liquefied gas fuel feeding system (10) according to claim 1, **characterized in that** the tank (14) is provided with a second pressure relief valve (34) and that the first pressure relief valve (28) is configured to open at a higher pressure than the second pressure relief valve (34).

4. The liquefied gas fuel feeding system (10) according to claim 1, **characterized in that** the return line (26) is provided with a check valve (36).

5. A marine vessel (40) comprising an internal combustion piston engine (12) provided with a liquefied gas fuel feeding system (10) according to any one of the preceding claims.

## Patentansprüche

1. Brenngasversorgungseinrichtung (10) für einen Kolbenverbrennungsmotor (12), die Folgendes umfasst:
einen Tank (14), der dazu konfiguriert ist, Kraftstoff unter kryogenen Bedingungen zu lagern, der, wenn er in Verwendung ist, einen Brenngasraum (14.1) umfasst, der eine Oberfläche (14.2) und einen Ausdehnungsraum (14.3) oberhalb der Oberfläche (14.2) aufweist;
eine Brenngasleitung (16), die eingerichtet ist, um sich von den Tank (14) zu dem Kolbenverbrennungsmotor (12) zu erstrecken, wobei die Brenngasleitung (16) nacheinander einen ersten Leitungsteilabschnitt (16.1) und einen zweiten Leitungsteilabschnitt (16.2) umfasst,
wobei der erste Leitungsteilabschnitt (16.1) dazu konfiguriert ist, das Brenngas von dem Tank (14) zu empfangen, und eine Brenngaspumpe (20) umfasst, die dazu konfiguriert ist, den Druck des Brenngases auf einen vorbestimmten ersten Druck zu erhöhen, und einen Gasverdampfer (24), der dazu konfiguriert ist, das Brenngas bei dem ersten Druck in Gasform zu verdampfen; und
wobei der zweite Leitungsteilabschnitt (16.2) dazu konfiguriert ist, gasförmiges Gas aus dem Gasverdampfer (24) zu empfangen, wobei der zweite Leitungsteilabschnitt (16.2) eine Gasventileinheit (25) umfasst, die dazu konfiguriert ist, die Strömungsverbindung zwischen dem Gasverdampfer (24) und dem Kolbenverbrennungsmotor (12) zu öffnen oder zu schließen;
wobei die Brenngasversorgungseinrichtung (10) mit einer Rücklaufleitung (26) versehen ist, die sich von dem zweiten Leitungsteilabschnitt (16.2) zu dem Tank (14) erstreckt, wobei die Rücklaufleitung (26) in den Ausdehnungsraum (14.3) des Tanks (14) mündet und mit einem ersten Druckentlastungsventil (28) versehen ist, das dazu konfiguriert ist, sich zu öffnen, wenn der Druck in dem zweiten Leitungsteilabschnitt (16.2) einen ersten eingestellten Druck überschreitet, **dadurch gekennzeichnet,**
**dass** die Brenngasversorgungseinrichtung (10) ein Rohr (30) umfasst, das dazu konfiguriert ist, eine Strömungsverbindung zwischen dem zweiten Leitungsteilabschnitt (16.2) und dem Ausdehnungsraum des Tanks (14) bereitzustellen, und dass das Rohr (30) mit einem Ventilelement (32) versehen ist, wobei sich das Rohr (30) von dem zweiten Leitungsteilabschnitt (16.2) zu der Rücklaufleitung (26) zu einem Ort zwischen dem ersten Druckentlastungsventil (28) und dem Tank (14) erstreckt, wobei das Rohr (30) mindestens teilweise zu dem ersten Druckentlastungsventil (28) parallel ist, und das Ventilelement (32) zu dem ersten Druckentlastungsventil (28) parallel ist.

2. Brenngasversorgungseinrichtung (10) nach Anspruch 1, **dadurch gekennzeichnet, dass** die Rücklaufleitung (26) mit einem Wärmetauscher (35) versehen ist, der an seiner ersten Seite an der Rücklaufleitung (26) und an seiner zweiten Seite an den ersten Leitungsteilabschnitt (16.1) der Brenngasleitung (16) gekoppelt ist.

3. Brennersversorgungseinrichtung (10) nach Anspruch 1, **dadurch gekennzeichnet, dass** der Tank (14) mit einem zweiten Druckentlastungsventil (34) versehen ist, und dass das erste Druckentlastungsventil (28) dazu konfiguriert ist, bei einem höheren Druck zu öffnen als das zweite Druckentlastungsventil (34).

4. Brenngasversorgungseinrichtung (10) nach Anspruch 1, **dadurch gekennzeichnet, dass** die Rücklaufleitung (26) mit einem Rückschlagventil (36) versehen ist.

5. Schiff (40), das einen Kolbenverbrennungsmotor (12) umfasst, der mit einer Brenngasversorgungseinrichtung (10) nach einem der vorstehenden Ansprüche versehen ist.

## Revendications

1. Système d'alimentation en carburant gazeux liquéfié (10) pour un moteur à piston à combustion interne (12) comprenant :
un réservoir (14) configuré pour stocker du carburant dans des conditions cryogéniques, qui, lorsqu'il est utilisé, comprend un espace de gaz liquide (14.1) ayant une surface (14.2) et un espace vide (14.3) au-dessus de la surface (14.2);
une conduite d'alimentation en carburant (16) agencée pour s'étendre du réservoir (14) au moteur à piston à combustion interne (12), la conduite d'alimentation en carburant (16) comprenant successivement un premier section de conduite (16.1) et un deuxième section de conduite (16.2),
dans lequel la première section de conduite (16.1) est configurée pour recevoir du gaz liquéfié du réservoir (14), et comprend une pompe à carburant liquide (20) configurée pour élever la pression du gaz liquéfié à une première pression prédéterminée et un évaporateur de gaz (24) configuré pour évaporer le gaz liquéfié sous forme gazeuse à la première pression ; et
dans lequel la deuxième section de conduite (16.2) est configurée pour recevoir du gaz gazeux provenant de l'évaporateur de gaz (24), la deuxième section de conduite (16.2) comprenant une unité de vanne de gaz (25) configurée pour ouvrir ou fermer le raccord d'écoulement entre l'évaporateur de gaz (24) et le moteur à piston à combustion interne (12) ;
le système d'alimentation en carburant gazeux liquéfié (10) est pourvu d'une conduite de retour (26) s'étendant de la deuxième section de conduite (16.2) au réservoir (14), la conduite de retour (26) débouchant dans l'espace mort (14.3) du réservoir (14) et étant pourvue d'une première soupape de décharge de pression (28) configurée pour s'ouvrir lorsque la pression dans la deuxième section de conduite (16.2) dépasse une première pression de consigne, **caractérisé en ce que**,
le système d'alimentation en carburant gazeux liquéfié (10) comprend une conduite (30) configurée pour fournir un raccord d'écoulement entre la deuxième section de conduite (16.2) et l'espace mort du réservoir (14), et **en ce que** la conduite (30) est pourvue d'un élément de soupape (32), la conduite (30) s'étend de la deuxième section de conduite (16.2) à la conduite de retour (26), jusqu'à un emplacement entre la première soupape de décharge de pression (28) et le réservoir (14), lequel conduit (30) est au moins partiellement parallèle à la première soupape de décharge de pression (28) et l'élément de soupape (32) est parallèle à la première soupape de décharge de pression (28).

2. Système d'alimentation en carburant gazeux liquéfié (10) selon la revendication 1, **caractérisé en ce que** la conduite de retour (26) est pourvue d'un échangeur de chaleur (35) couplé à son premier côté à la conduite de retour (26) et à son deuxième côté à la première section de conduite (16.1) de la conduite d'alimentation en carburant (16).

3. Système d'alimentation en carburant gazeux liquéfié (10) selon la revendication 1, **caractérisé en ce que** le réservoir (14) est pourvu d'une deuxième soupape de décharge de pression (34) et que la première soupape de décharge de pression (28) est configurée pour s'ouvrir à une pression plus élevée que la deuxième soupape de décharge de pression (34).

4. Système d'alimentation en carburant gazeux liquéfié (10) selon la revendication 1, **caractérisé en ce que** la conduite de retour (26) est pourvue d'un clapet antiretour (36).

5. Navire marin (40) comprenant un moteur à piston à combustion interne (12) équipé d'un système d'alimentation en carburant gazeux liquéfié (10) selon une quelconque des revendications précédentes.
